# DEMANDE DE BREVET EUROPEEN

(11) **EP 2 127 738 A1**
(43) Date de publication de la demande: **02.12.2009**
(21) Numéro de dépôt: 08156791.9
(22) Date de dépôt: 23.05.2008
(51) Int. Cl.: B01J 8/36, B01J 8/38

(54) **Procédé de transformation thermique et/ou catalytique de fluides réactifs traversant différents volumes longitudinaux de réaction d'un lit fluidifié rotatif.**

(71) Demandeur: Total Petrochemicals Research Feluy, 7181 Seneffe (Feluy) (BE)
(72) Inventeur: de Broqueville, Axel, 1390 Grez-Doiceau (BE)

(57) **Abrégé**

La présente invention se rapporte à des procédés de transformation thermique et/ou catalytique d'au moins deux fluides réactifs différents traversant un lit fluidifié rotatif comprenant des particules solides pouvant être ou contenir des catalyseurs et tournant à l'intérieur d'une chambre de réaction annulaire, dans lequel les dits fluides réactifs (A, C) sont injectés séparément et traversent ledit lit fluidifié rotatif chacun dans au moins un volume longitudinal de réaction (VA, VC), lesquels volumes de réaction sont optionnellement séparés l'un de l'autre par au moins deux volumes longitudinaux de séparation (VB1, VB2) où est injecté un fluide de séparation (B). La présente invention se rapporte également à un dispositif à lit fluidifié rotatif permettant une transformation thermique et/ou catalytique d'au moins deux fluides réactifs différents traversant le lit fluidifié rotatif, et à l'utilisation d'un tel dispositif dans des procédés de craquage, de déshydrogénation ou d'autres transformations thermiques et/ou catalytiques de fluides.

## Description

### Domaine technique de l'invention

La présente invention se rapporte à des procédés de transformation thermique et/ou catalytique d'au moins deux fluides réactifs différents traversant un lit fluidifié rotatif comprenant des particules solides pouvant être ou contenir des catalyseurs et tournant à l'intérieur d'une chambre de réaction annulaire, dans lequel les dits fluides réactifs (A, C) sont injectés séparément et traversent ledit lit fluidifié rotatif chacun dans au moins un volume longitudinal de réaction (VA, VC), lesquels volumes de réaction sont optionnellement séparés l'un de l'autre par au moins deux volumes longitudinaux de séparation (VB1, VB2) où est injecté un fluide de séparation (B).

La présente invention se rapporte également à un dispositif à lit fluidifié rotatif comprenant un dispositif d'alimentation de fluides permettant d'alimenter séparément au moins trois fluides différents traversant le lit fluidifié rotatif, en particulier deux fluides réactifs (A et C), chacun dans au moins un volume longitudinal de réaction, séparé l'un de l'autre par deux autres volumes longitudinaux de séparation où est alimenté un troisième fluide (B), appelé fluide de séparation et comprenant un dispositif permettant d'évacuer séparément les dits fluides réactifs (A et C).

La présente invention se rapporte aussi à l'utilisation d'un tel dispositif dans des procédés de craquage, de déshydrogénation ou d'autres transformations thermiques et/ou catalytiques de fluides.

### Arrière plan technologique de l'invention

Les dispositifs permettant d'obtenir des lits fluidifiés rotatifs dans une chambre circulaire fixe en injectant des fluides tangentiellement le long de la paroi circulaire extérieure de la dite chambre annulaire sont connus et décrits dans par exemple les demandes de brevet W0 2006/064046 ou WO2007/122211.

Des dispositifs à lit fluidifié rotatif, tel que ceux décrits dans ces demandes de brevet peuvent comprendre une chambre d'alimentation de fluide qui est divisée en au moins deux zones annulaires. Ces dispositifs peuvent être traversés par des fluides différents à travers de différentes zones annulaires séparées. A cette fin les zones annulaires dans ces dispositifs sont de préférence séparées par des cloisons pourvues d'ouvertures par où lesdites particules solides peuvent passer. Les dites cloisons annulaires permettent d'alimenter séparément des fluides de compositions et/ou à des températures et/ou à des pressions différentes dans le dispositif. Tels dispositifs permettent d'obtenir des réactions différenciées dans des différentes zones annulaires d'une chambre annulaire d'un réacteur.

Dans de tels dispositifs, la circulation longitudinale des solides d'une zone à l'autre est relativement lente par rapport à leur vitesse de rotation à l'intérieur de chaque zone annulaire et par rapport au débit de gaz traversant le lit fluidifié. Ces dispositifs ne conviennent donc pas pour les procédés où la circulation des solides est de préférence beaucoup plus grande que le débit massique des gaz qui traversent le lit fluidifié.

### Sommaire de l'invention

La présente invention se rapporte à un procédé et à un dispositif permettant d'injecter des fluides différents à travers des volumes longitudinaux de réaction d'une chambre de réaction, afin d'obtenir des réactions différenciées dans ces différents volumes longitudinaux. Tels volumes longitudinaux ont l'avantage que la vitesse de rotation du lit fluidifié étant élevée, d'au moins un ordre de grandeur plus élevée que la circulation longitudinale, ces volumes longitudinaux sont traversés par une circulation de solides d'au moins un ordre de grandeur supérieur au débit massique des fluides qui les traversent. Ceci permet de transférer des calories ou des frigories d'une zone (d'un volume) longitudinale à l'autre et d'y maintenir une température quasiment uniforme. Elle convient donc particulièrement bien aux procédés nécessitant des transferts de chaleur important d'une zone (d'un volume) à l'autre.

Dans un premier aspect, la présente invention se rapporte à un procédé de transformation thermique et/ou catalytique d'au moins deux fluides réactifs différents traversant un lit fluidifié rotatif comprenant des particules solides pouvant être ou contenir des catalyseurs et tournant à l'intérieur d'une chambre de réaction annulaire. Plus en particulier, la présente invention est **caractérisée en ce que:**
- lesdits fluides réactifs (A, C) sont injectés séparément et traversent ledit lit fluidifié rotatif chacun dans au moins un volume longitudinal de réaction (VA, VC);
- la composition et/ou la température desdites particules solides dans ledit lit fluidifié rotatif est modifiée au contact avec lesdits fluides réactif (A, C),
- lesdits fluides réactifs (A, C) sont transformés au contact des particules solides en des fluides transformés (A', C'), et
- les fluides transformés (A', C') sont évacués de la chambre de réaction annulaire par un dispositif d'évacuation des fluides.

Selon un autre mode de réalisation, le procédé de la présente invention est **caractérisé en ce que** les fluides transformés (A', C') sont évacués séparément de la dite chambre annulaire par au moins deux chambres longitudinales d'évacuation séparées.

La présente invention se rapporte également à un procédé dans lequel un troisième fluide, un fluide de séparation (B), différent des fluides réactifs (A, C) est injecté séparément des dits fluides réactif (A, C) et traverse ledit lit fluidifié rotatif dans au moins deux volumes longitudinaux de séparation (VB1, VB2) séparant les volumes longitudinaux de réaction (VA, VC) l'un de l'autre.

Selon un mode particulier le présent procédé est en plus **caractérisé en ce que** les dits fluides sont injectés dans la dite chambre annulaire à partir de surfaces longitudinales d'injection et que les positions relatives des ces surfaces sont déplaçables par rapport à la position des surfaces longitudinales d'évacuation des fluides par où les fluides sont évacués centralement de la dite chambre annulaire.

Selon ce procédé, le lit fluidifié rotatif qui tourne rapidement à l'intérieur de la chambre annulaire est ainsi traversé successivement par les différents fluides. Chaque fluide chassant du lit fluidifié le fluide injecté en amont en s'y substituant, le ou les fluides de séparation -si présents- permettent de séparer les fluides réactifs et donc de les empêcher de réagir ensemble. Ceci permet par exemple de chauffer ou de refroidir les particules solides à l'aide d'un fluide A et/ou, si les particules solides sont des catalyseurs, de les régénérer, et ensuite de transformer thermiquement et/ou catalytiquement le fluide C. Après avoir traversé le lit fluidifié rotatif, les différents fluides peuvent être évacués au travers d'un dispositif d'évacuation comprenant au moins une cheminée centrale, fixe ou rotative, munie d'ouvertures de sortie par où le fluide peut pénétrer dans la cheminée centrale. Le ou les fluides de séparation -si présents- sont mélangés aux fluides réactifs et évacués en même temps.

Dans un deuxième aspect, la présente invention se rapporte à un dispositif à lit fluidifié rotatif permettant la transformation thermique et/ou catalytique d'au moins deux fluides réactifs différents (A,C) en des fluides transformés (A',C') comprenant:
- un réacteur comprenant au moins une chambre annulaire (44) contenant des particules solides délimitée par une paroi circulaire extérieure (2), une paroi circulaire intérieure (7, 7.1, 7.2) et deux côtés latéraux;
- un dispositif d'alimentation de particules solides dans la dite chambre annulaire (44) au travers d'une ou de plusieurs de ses parois circulaires et/ou latérales;
- un dispositif d'alimentation de fluides, gazeux ou liquides, permettant d'alimenter séparément au moins trois fluides différents, comprenant au moins deux fluides réactifs (A, C) et un fluide de séparation (B) comprenant des injecteurs de fluides répartis le long de ladite paroi circulaire extérieure permettant d'injecter les fluides le long de cette paroi dans une direction ayant une composante principalement tangentielle,
- un dispositif d'évacuation des fluides comprenant une cheminée centrale traversant ou pénétrant dans la dite chambre annulaire et munies d'ouvertures de sortie (9, 9.1, 9.2) par où les fluides peuvent être évacués de la dite chambre annulaire (44).

Le dispositif à lit fluidifié rotatif est **caractérisé en ce que** la dite cheminée centrale est divisée en au moins deux volumes ou deux chambres longitudinaux d'évacuation séparés (ZA, ZC ou ZF, ZR) par où les fluides transformés (A',C') peuvent être évacués séparément.

Dans un autre mode de réalisation, l'invention se rapporte à un dispositif **caractérisé en ce que** la dite cheminée centrale est divisée en au moins une chambre longitudinale d'évacuation fixe et une chambre longitudinale d'évacuation rotative.

Le dispositif selon la présente invention est un dispositif à lit fluidifié rotatif semblable à ceux décrits dans les demandes de brevet citées ci-dessus, **caractérisé en ce que** quand le dispositif est en utilisation, la paroi circulaire extérieure (2) de ladite chambre annulaire (44) est divisée en au moins quatre surfaces longitudinales d'injection, comprenant au moins deux surfaces longitudinales d'injection par laquelle sont injectés les fluides réactifs (A, C) et au moins deux surfaces longitudinales d'injection par laquelle est injecté un fluide de séparation (B).

Le dispositif selon la présente invention est caractérisé en ce, quand le dispositif est en utilisation, ladite chambre annulaire (44) est divisée en au moins quatre volumes longitudinaux comprenant au moins deux volumes réactif, traversé par les fluides réactifs (A, C) et au moins deux volumes de séparation, traversé par un fluide de séparation (B).

Dans un mode de réalisation le dispositif selon la présente invention est **caractérisé en ce qu**'il comprend un dispositif permettant de modifier la position relative des dites surfaces longitudinales d'injection par rapport à la position des dites chambres longitudinales d'évacuation séparées.

Dans un autre mode de réalisation le dispositif selon la présente invention est **caractérisé en ce qu**'il comprend un dispositif permettant de modifier la position relative des dites surfaces longitudinales d'évacuation par rapport à la position des surfaces longitudinales d'injection.

Dans un troisième aspect, la présente invention se rapporte à l'utilisation d'un dispositif à lit fluidifié rotatif décrit ci-dessus, pour la transformation thermique et/ou catalytique d'au moins deux fluides réactifs différents (A, C) en des fluides transformés (A', C') selon un procédé de la présente invention.

D'autres caractéristiques et exemples de procédés et de dispositifs suivant la présente invention sont décrits ci-dessous de façon non limitative.

### Brève description des dessins

La **figure 1** représente une section transversale schématique d'un exemple d'un dispositif cylindrique à lit fluidifié rotatif selon l'invention.
La **figure 2** représente la section transversale schématique du dispositif cylindrique à lit fluidifié rotatif selon la figure 1 sur laquelle sont indiquées les volumes longitudinaux de réaction (VA et VC) et les volumes de transition (ZAC).
La **figure 3** représente une section transversale schématique d'un autre exemple d'un dispositif cylindrique à lit fluidifié rotatif selon l'invention.
La **figure 4** représente la section transversale schématique du dispositif cylindrique à lit fluidifié rotatif selon la figure 3 sur laquelle sont indiquées les différents volumes longitudinaux de réaction (VA, VC) et de séparation (VB1/VB2) et les volumes de transition (ZAB, ZBC).
La **figure 5** représente une section transversale d'un autre exemple d'un dispositif à lit fluidifié rotatif comprenant une chambre annulaire (44) dont la forme est ovale, et une cheminée rotative.
La **figure 6** représente la section transversale du dispositif cylindrique à lit fluidifié rotatif de la figure 5, sur laquelle sont indiquées les différents volumes longitudinaux de réaction (VA, VC) et de séparation (VB1/VB2) et les volume de transitions (ZAB, ZBC).

### Description détaillée de l'invention

### PROCEDES

La présente invention se rapporte à des procédés de transformation thermique et/ou catalytique d'au moins deux fluides réactifs différents traversant un lit fluidifié rotatif comprenant des particules solides pouvant être ou contenir des catalyseurs et tournant à l'intérieur d'une chambre de réaction annulaire.

Selon un mode particulier de réalisation la présente invention se rapporte à un procédé **caractérisé en ce qu**'un fluide réactif (A ou C) comprend un composant ou un mélange de plusieurs composants, qui sont injectés à proximité l'un de l'autre à l'intérieur du même volume longitudinal de réaction du fluide.

Par «fluide » on entend un fluide, gazeux ou liquide, contenant un ou plusieurs composants. Par « fluide réactif » on entend un fluide capable de réagir et de subir une transformation ou modification au contact avec des particules solides d'un lit fluidifié rotatif. Par « fluides réactifs différents » on entend des fluides qui ont une composition et/ou une caractéristique, par exemple une température, différente.

Dans le procédé de l'invention les dits fluides réactifs (A, C) sont injectés séparément et traversent ledit lit fluidifié rotatif chacun dans au moins un volume longitudinal de réaction (VA, VC).

Les fluides réactif injectés modifient la composition et/ou la température des particules solides présentes dans ledit lit fluidifié rotatif au contact des ces particules solides. Le contact avec lesdites particules solides entraîne également une transformation des fluides réactifs (A, C) en des fluides transformés (A', C'). Par « fluide transformé » on entend un fluide réactif qui a subi une transformation ou modification au contact avec les particules solides du lit fluidifié rotatif.

Ensuite, les fluides transformés (A', C') sont évacués de la chambre de réaction annulaire par un dispositif d'évacuation des fluides.

Dans certains modes de réalisation de la présente invention il est nécessaire d'empêcher que les fluides réactif (A, C) se mélangent et interagissent. C'est pourquoi le procédé selon l'invention prévoit également l'injection d'un troisième fluide, appelé un fluide de séparation (B), différent des fluides réactifs (A, C). De préférence le « fluide de séparation » ne réagit pas et ne subi pas de modification ou de transformation au contact avec les particules solides du lit fluidifié rotatif, et il peut être mélangé avec les fluides réactifs sans entraîner ou influencer leur modification ou transformation. Le fluide de séparation est injecté séparément des dits fluides réactif (A, C) et traverse ledit lit fluidifié rotatif dans au moins deux volumes longitudinaux de séparation (VB1, VB2) séparant les volumes longitudinaux de réaction (VA, VC) l'un de l'autre.

Dans certains modes de réalisation de la présente invention les termes « zone » et « volume » sont utilisés comme synonymes.

Le terme « volume longitudinal» tel qu'utilisé dans la présente invention se réfère à un volume de la chambre annulaire d'un dispositif à lit fluidifié qui est délimité par :
- une surface longitudinale d'injection ; c'est-à-dire une partie de la surface longitudinale de la paroi circulaire extérieure (2) de la chambre annulaire (44) s'étendant de préférence sur la longueur intégrale de la dite chambre annulaire, la dite partie de la surface étant comprise entre les surfaces courbes nommées ci-après,
- deux surfaces courbes partant des bords longitudinaux de ladite partie de la surface longitudinale de la paroi circulaire extérieure et suivant les lignes de flux des fluides injectés le long de ces dits bords longitudinaux, et
- une surface longitudinale d'évacuation ; c'est-à-dire une partie de la surface longitudinale de la paroi circulaire intérieure (7) de la dite chambre annulaire (44), et s'étendant de préférence sur la longueur intégrale de la dite chambre annulaire, la dite partie de la surface étant comprise entre les surfaces courbes nommées ci-dessus.

Une « partie de la surface longitudinale » de la paroi circulaire (intérieure ou extérieure) de la chambre annulaire et s'étendant sur une certaine longueur de la dite chambre annulaire peut également être appelé ci-après « section longitudinale» ou « tranche longitudinale » de la paroi circulaire (intérieure ou extérieure) de la dite chambre annulaire.

Les fluides sont injectés au travers de surface dans des volumes.

Le terme « surface longitudinale d'injection » se rapporte à une partie de la *surface* de la paroi circulaire extérieure de la chambre annulaire et qui s'étend de préférence sur la longueur intégrale de la dite chambre annulaire, *et à partir* de ou par laquelle des fluides sont injecté dans la dite chambre annulaire, par exemple à travers d'injecteurs de fluide ayant des ouvertures d'entrée reparties le long de ladite surface.

Le terme « surface longitudinale d'évacuation» se rapporte à une partie de la *surface* longitudinale de la paroi circulaire intérieure de la dite chambre annulaire, et s'étendant de préférence sur la longueur intégrale de la dite chambre annulaire, *et à partir* de ou par laquelle un ou des fluides transformés, éventuellement mélangés avec un ou une partie d'un fluide de séparation, sont évacués de la dite chambre annulaire.

Le terme « volume longitudinal de réaction » se réfère à un volume longitudinal de la chambre annulaire tel que défini ci-dessus qui est traversé par un ou des fluides de réaction qui réagissent au contact des particules solides circulant au travers de ce volume.

Le terme « volume longitudinal de séparation » se réfère à un volume longitudinal de la chambre annulaire tel que défini ci-dessus qui sépare deux volumes longitudinaux de réaction, qui est donc intercalé entre deux volumes longitudinaux de réaction, et qui est traversé par un ou des fluides de séparation.

Les dites « surfaces courbes » séparant différents volumes longitudinaux ne sont pas des cloisons et/ou parois et permettent ainsi un passage libre et non obstrué des particules solides tournant autour de l'axe de rotation d'un volume à l'autre. La vitesse de rotation des particules solides étant généralement élevée, le flux de particules solides passant d'un volume longitudinal à l'autre est donc aussi très élevé, généralement d'au moins un ordre de grandeur supérieur à la circulation des particules solides d'une tranche annulaire à l'autre et de préférence d'au moins un ordre de grandeur supérieur au débit massique du gaz traversant le dit volume longitudinal.

Ces dites surfaces courbes suivent les lignes de flux des fluides injectés le long des bords longitudinaux des dits volumes longitudinaux, elles ne sont que peu traversées par les fluides injectés de part et d'autre. Toutefois un certain mélange des fluides s'opère le long de ces surfaces dans des volumes ci-après appelés « volumes de transition ». Si ce mélange de fluides est indésirable, les volumes longitudinaux dans lesquels les fluides qui ne peuvent pas être mélangés sont injectés, doivent être séparés par des volumes longitudinaux dans lesquels sont injectés des fluides de séparation.

Les surfaces courbes qui séparent les volumes longitudinaux ne sont pas fixes. Elles peuvent se déplacer légèrement en fonction des variations normales des conditions opératoires. De même elles ne sont pas "réglées", c'est à dire formées par des droites se déplaçant parallèlement à l'axe de rotation, dans la mesure où les lignes de flux des fluides peuvent différer lorsqu'on se déplace longitudinalement et donc que l'on se rapproche ou s'éloigne des côtés latéraux. Elles sont donc approximativement perpendiculaires aux sections transversales.

Le terme « volume de transition» se réfère à un volume longitudinal de la chambre annulaire tel que défini ci-dessus qui est intercalé entre un volume longitudinal de réaction et un volume longitudinal de séparation. Tels volumes de transition sont donc des volumes relativement étroits, situés entre un volume longitudinal de réaction et un volume longitudinal de séparation dans lequel il y a un mélange d'un fluide réactif avec un fluide de séparation.

Les fluides transformés (A', C') peuvent être évacués ensemble ou séparément de la chambre de réaction annulaire par un dispositif d'évacuation des fluides.

Selon un mode de réalisation, le procédé de la présente invention est **caractérisé en ce que** les fluides transformés (A', C') sont évacués ensemble de la dite chambre annulaire par un dispositif d'évacuation de fluide, par exemple par une cheminée centrale. Tel mode de réalisation est réalisable dans le cas ou les fluides transformés sont compatibles et peuvent être mélangés. Si dans tel mode de réalisation un fluide de séparation est également mis en oeuvre, ce fluide de séparation est évacué ensemble avec les fluides transformés.

Selon un autre mode de réalisation, le procédé de la présente invention est **caractérisé en ce que** les fluides transformés (A', C') sont évacués séparément de la dite chambre annulaire par au moins deux chambres ou volumes longitudinaux d'évacuation différents. Tel mode de réalisation est nécessaire dans le cas ou les fluides transformés ne sont pas compatibles et ne peuvent pas être mélangés.

Le terme « volume longitudinal d'évacuation » ou « chambre longitudinale d'évacuation » ou « zone longitudinal d'évacuation » correspond dans certains modes de réalisation de la présente invention à une cheminée centrale, fixe ou rotative. Dans certains autres modes de réalisation un volume longitudinal d'évacuation ou une chambre longitudinale d'évacuation correspondent à une partie d'une cheminée centrale, qui est délimité par :
- une partie de la surface longitudinale de la paroi circulaire intérieure (7) de la dite chambre annulaire (44), et s'étendant de préférence sur la longueur intégrale de la dite chambre annulaire, et
- une paroi ou ensemble de parois, partant des bords longitudinaux de ladite partie de la surface longitudinale de la paroi circulaire intérieure et s'étendant le long de ces dits bords longitudinaux.

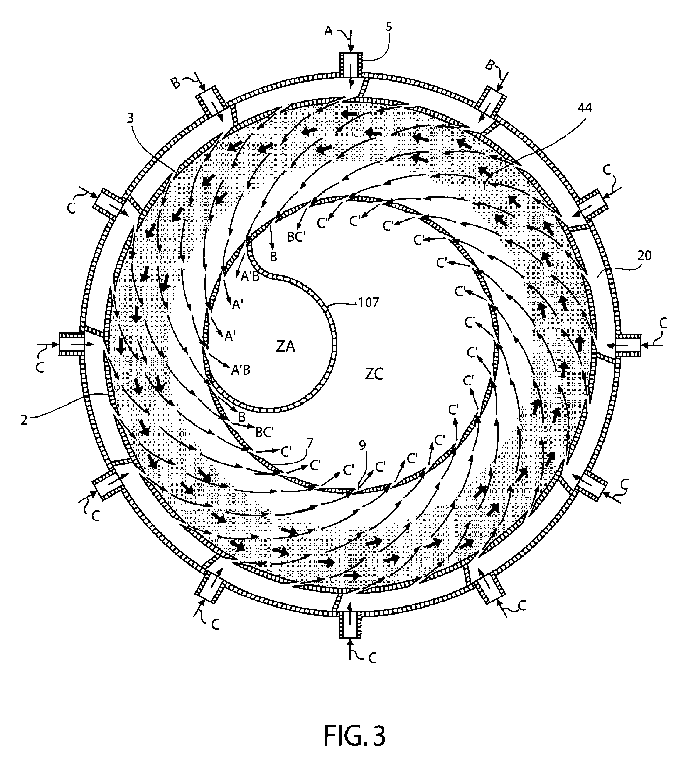

Telle chambre longitudinale d'évacuation peut donc être délimitée par une partie de la paroi de la cheminée centrale et une autre paroi longitudinale (107) qui s'étend sur la longueur intégrale de ladite cheminée, comme illustré à la figure 3.

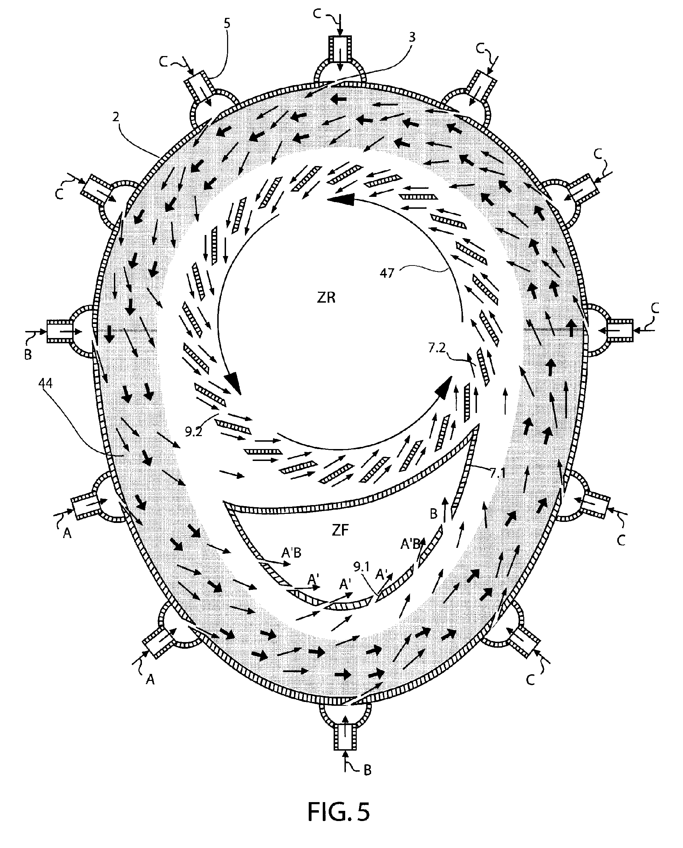

Dans un autre mode de réalisation, différentes chambres longitudinales d'évacuation peuvent être obtenues en utilisant différentes cheminées centrales, dont l'une peut être rotative, comme illustré à la figure 5.

Selon le présent procédé, avant l'alimentation de solides dans le dispositif à lit fluidifié, les fluides réactifs parcourent un long trajet dans la chambre annulaire et donc leur séparation est mauvaise. Cependant, dès l'introduction d'une faible quantité de solides, le trajet parcouru par les fluides devient beaucoup plus court, ce qui entraîne une bonne séparation des fluides. Lorsque la quantité de solides augmente, la longueur des trajets devient de plus en plus courte. C'est pourquoi dans des procédés dans lesquelles il est nécessaire de séparer les fluides lors de leur évacuation, la position relative des injecteurs d'un fluide spécifique et des ouvertures de sorties de ce fluide doit pouvoir s'adapter aux conditions opératoires. C'est pourquoi selon un mode de réalisation de l'invention le procédé est **caractérisé en ce que** les dits fluides sont injectés dans la dite chambre annulaire (44) à partir de surfaces longitudinales d'injection et que les positions relatives des ces surfaces sont déplaçables par rapport à la position des surfaces longitudinales d'évacuation des fluides (9) par où les fluides sont évacués centralement de la dite chambre annulaire (44).

Dans un autre mode de réalisation la présente invention prévoit un procédé **caractérisé en ce que** ladite modification des particules solides comprend le chauffage des particules solides en contactant les dites particules solides avec un fluide réactif préchauffé (A) en/ou à l'aide de réactions chimiques entre le fluide réactif (A) et les particules solides et/ou entre les différents composants du fluide réactif (A).

Dans un autre mode de réalisation la présente invention prévoit un procédé **caractérisé en ce que** ladite modification des particules solides comprend le refroidissement des particules solides en contactant les dites particules solides avec un des fluides réactifs (A) qui contient un liquide de refroidissement pulvérisé sous la forme de fines gouttelettes et qui en s'évaporant au contact des dites particules solides les refroidissent.

Selon un autre mode particulier de réalisation la présente invention se rapporte à un procédé caractérisé en ce les fluides transformés (A', C') sont refroidis pendant leur évacuation de la dite chambre annulaire en pulvérisant des gouttelettes d'un liquide de refroidissement à l'intérieur du dit dispositif d'évacuation des fluides.

Dans le présent procédé la force centrifuge exercée sur le lit fluidifié rotatif peut être très élevée, et donc la vitesse radiale moyenne des fluides qui le traversent peut aussi être relativement élevée. L'épaisseur moyenne du lit fluidifié étant généralement relativement mince, il est rapidement traversé par les fluides. Le temps de contact entre les fluides et les particules solides peut être très inférieur à la seconde, et de préférence inférieur à un dixième de seconde, un centième de seconde ou même un millième de seconde. Il peut donc être de l'ordre de la milliseconde lorsque le fluide à transformer est un gaz.

Ceci permet de faire traverser un lit fluidifié par un très grand volume de fluide, généralement un ou deux ordres de grandeur plus élevé que dans les lits fluidifiés classiques, ce qui permet de réduire considérablement les dimensions des unités de production industrielle, dans la mesure où la vitesse de réaction le permet.

Celle-ci peut être augmentée en utilisant des catalyseurs de plus petites dimensions, ce qui est rendu possible grâce à la force centrifuge des lits fluidifiés rotatifs et/ou en travaillant à des pressions et/ou à des températures plus élevées, ce qui nécessite un dispositif de réchauffage très rapide du fluide à transformer, ce qui est rendu possible par le procédé et le dispositif de l'invention. En effet, le lit fluidifié tournant rapidement à l'intérieur de la chambre annulaire, généralement plusieurs rotations par seconde, les particules solides sont en contact plusieurs fois par seconde avec le ou les fluides, qui les régénèrent et/ou les réchauffent ou les refroidissent, ce qui permet de bien contrôler leur température et leur régénération. La densité des particules solides étant de préférence au moins un ordre de grandeur supérieur à la densité des fluides et leur vitesse de rotation étant de préférence au moins plusieurs fois la vitesse radiale moyenne du fluide, le rapport entre la circulation des solides et le débit du fluide est généralement d'au moins un ordre de grandeur supérieur à un, et de deux ordres de grandeur lorsque le fluide est un gaz à basse pression. Ceci permet aux particules solides de céder ou de recevoir une quantité de calories relativement grande sans variations importantes de leur température et ainsi de porter et de maintenir les fluides qui traversent le lit fluidifié à la température souhaitée.

Le procédé selon la présente invention permet de combiner une réaction endothermique et exothermique dans un seul réacteur. Le présent procédé a comme principaux avantages de permettre :
- de chauffer uniformément un lit fluidifié rotatif et donc d'augmenter la température des fluides qui le traversent, en ne chauffant qu'une petite zone du lit fluidifié, par exemple avec un fluide très chaud et/ou à l'aide d'une réaction très exothermique,
- de refroidir uniformément un lit fluidifié rotatif et donc de diminuer la température du fluide qui le traverse, en ne refroidissant qu'une petite zone du lit fluidifié, par exemple en évaporant un fluide de refroidissement au contact des particules solides chaudes,
- un excellent transfert de chaleur, en particulier de calories ou de frigories, entre le fluide et les solides à l'intérieur du lit fluidifié rotatif permettant de rapidement obtenir et de maintenir une température uniforme à l'intérieur du lit fluidifié,
- un transfert de chaleur, en particulier de calories ou de frigories, entre le fluide et les solides à l'intérieur du lit fluidifié extrêmement rapide permettant au fluide de quasi-instantanément adopter la température du lit fluidifié en le traversant,
- de maintenir la température des solides et donc du lit fluidifié à un niveau quasi uniforme et de maintenir la température du ou des fluides réactifs à celle du lit fluidifié rotatif,
- une régénération continue des particules solides dans le lit fluidifié.

Le présent procédé permet d'obtenir une température du lit fluidifié qui est plus homogène que dans un lit fluidifié conventionnel, car la chaleur peut être transférée à un débit plus élevé. En comparaison, des lits fluidifiés classiques nécessitent une forte turbulence afin d'homogénéiser la température du lit et dans des lits fluidifiés fixes il n'est pas possible d'homogénéiser la température du lit, ce qui favorise la formation de zones dans la chambre du réacteur à température trop élevée dénommées « points chauds ».

La présente invention est donc particulièrement intéressante pour des procédés impliquant des réactions très endothermiques et/ou exothermiques et devant se produire en un temps très court dans une zone de température étroite, vu la capacité des lits fluidifiés rotatifs utilisés de rapidement transférer de la chaleur (calories ou frigories) et de maintenir une température homogène.

La présente invention peut être appliquée dans plusieurs différents procédés, en particulier des procédés de craquage, de déshydrogénation ou d'autres transformations thermiques et/ou catalytiques de fluides. En particulier la présente invention se rapporte aux procédés de transformation catalytique de fluides avec un apport continu de calories ou de frigories et/ou avec la régénération continue du catalyseur.

Dans un mode de réalisation l'invention se rapporte à un procédé **caractérisé en ce que** le fluide réactif (A) comprend au moins deux composants ou un mélange de plusieurs composants, qui sont injectés ensemble ou à proximité l'un de l'autre au travers d'un même volume de réaction et qui réagissent entre eux en produisant de la chaleur au contact des solides à l'intérieur du volume longitudinal de réaction du fluide.

Dans un exemple, l'invention se rapporter à un procédé de transformation thermique et/ou catalytique dans le quel un des fluides de réaction (A) contient comme composants de l'oxygène et un fluide combustible, de préférence de l'hydrogène ou des hydrocarbures légers, lesquelles composants sont injectés en mélange ou séparément, et lesquelles composants réagissent ensemble à l'intérieur du lit fluidifié en produisant de la chaleur qui est transférée aux dites particules solides.

Dans un autre exemple, l'invention peut se rapporter à un procédé de transformation thermique et/ou catalytique de fluides dans lequel
- un des fluides de réaction (A) contient comme composant de l'oxygène,
- un autre fluide de réaction (C) contient comme composant un hydrocarbure et produit de l'hydrogène lors de sa transformation, par exemple un autre fluide de réaction (C) contient un composé hydrogéné comme par exemple de l'éthylbenzène ou du propane et produit de l'hydrogène lors de sa transformation (déshydrogénation),
- les dites particules solides contiennent un métal qui est oxydé par l'oxygène contenu dans le dit fluide de réaction (A), et
- les oxydes du dit métal sont réduits par de l'hydrogène produit par le dit fluide de réaction (C).

Dans encore un autre exemple, l'invention peut se rapporter à un procédé de transformation thermique et/ou catalytique de fluides dans le quel un des fluides de réaction (C) contient des hydrocarbures qui, en se transformant au contact des dites particules solides, déposent du carbone sur les dites particules solides du dit lit fluidifié rotatif et dans le quel un autre fluide de réaction (A) contient de l'oxygène qui oxyde le dit carbone et réchauffe les dites particules solides. Si la quantité de carbone déposée sur les particules solides est trop faible pour apporter les calories nécessaires à la transformation du fluide de réaction (C), par exemple pour la transformation d'hydrocarbures légers, comme les oléfines d'essence de cracking, le naphte, le butane, le propane ou l'éthane, le fluide de réaction (A) peut contenir un composant combustible, de préférence de l'hydrogène et/ou du méthane.

### DISPOSITIF

La présente invention se rapporte également à un dispositif à lit fluidifié rotatif permettant la transformation thermique et/ou catalytique d'au moins deux fluides réactifs différents (A,C) en des fluides transformés (A',C').

Le dispositif à lit fluidifié rotatif selon la présente invention comprend un réacteur comprenant au moins une chambre annulaire contenant des particules solides. Le terme « chambre annulaire » se réfère à une chambre à l'intérieur d'un réacteur délimitée par deux parois circulaires concentriques et des côtés latéraux.

Le terme « paroi circulaire» est utilisé pour indiquer une paroi qui peut être de forme générale cylindrique, elliptique, conique ou polygonale ou avoir une autre forme avec des courbures diverses pouvant comprendre des parties concaves. Par exemple sa surface intérieure peut être polygonale ou ondulée et la forme de ses sections transversales peut être elliptique ou même avoir la forme de la section d'un oeuf ou d'une banane. Sa section transversale ne doit pas nécessairement être constante. Par exemple elle peut diminuer progressivement. Dans ce cas, si elle est cylindrique ou polygonale, on peut la définir comme formant un cône ou une pyramide tronquée.

Le dispositif selon l'invention comprend un dispositif d'alimentation de fluides permettant d'alimenter séparément au moins trois fluides différents: deux fluides principaux, également appelé des fluides réactifs (A et C), dans au moins deux volumes longitudinaux de réaction, séparées par deux autres volumes longitudinaux où est alimenté un troisième fluide (B), appelé fluide de séparation, de préférence non réactif. Le dispositif selon l'invention est **caractérisé en ce que**, quand le dispositif est en utilisation, la paroi circulaire extérieure (2) de ladite chambre annulaire (44) est divisée en au moins quatre surfaces longitudinales d'injection, comprenant au moins deux surfaces longitudinales d'injection par laquelle sont injectés les fluides réactifs (A, C) et au moins deux surfaces longitudinales d'injection par laquelle est injecté un fluide de séparation (B). Un dispositif selon l'invention comprend donc, en utilisation, une chambre annulaire (44) qui est divisée en au moins quatre volumes longitudinaux comprenant au moins deux volumes longitudinaux de réaction différents (VA, VC), dans lesquelles sont respectivement injectés les fluides réactifs (A, C), séparés par au moins deux volumes longitudinaux de séparation différents (VB1, VB2), dans lesquelles est alimenté un fluide de séparation (B).

La paroi circulaire intérieure (7) délimite un espace centrale qui peut être appelée la cheminée centrale. Le terme « cheminée centrale » se réfère donc à un dispositif permettant d'évacuer centralement les fluides de ladite chambre annulaire. Le mot central signifie que ce dispositif n'est pas en contact direct avec la paroi circulaire extérieure de ladite chambre annulaire. Selon un mode particulier de l'invention, le dispositif à lit fluidifié selon l'invention peut comprendre une ou plusieurs cheminées centrales en fonction de la forme de la chambre annulaire et/ou des fluides à transformer dans le procédé selon l'invention.

Plus en particulier, le dispositif selon l'invention est **caractérisé en ce que** la dite cheminée centrale est divisée en au moins deux volumes longitudinaux d'évacuation séparés (ZA, ZC ou ZF, ZR), également appelées chambres longitudinales d'évacuation, par où les fluides transformés (A',C') peuvent être évacués séparément. Telles chambres longitudinales d'évacuation peuvent toutes deux être fixes ou le dispositif peut comprendre une chambre longitudinale d'évacuation fixe et une chambre longitudinale d'évacuation rotative.

Dans un mode de réalisation, le dispositif à lit fluidifié selon l'invention peut comprendre une cheminée centrale rotative et/ou fixe. Le dispositif à lit fluidifié selon l'invention peut donc comprendre une chambre longitudinale d'évacuation fixe et/ou une chambre longitudinale d'évacuation rotative.

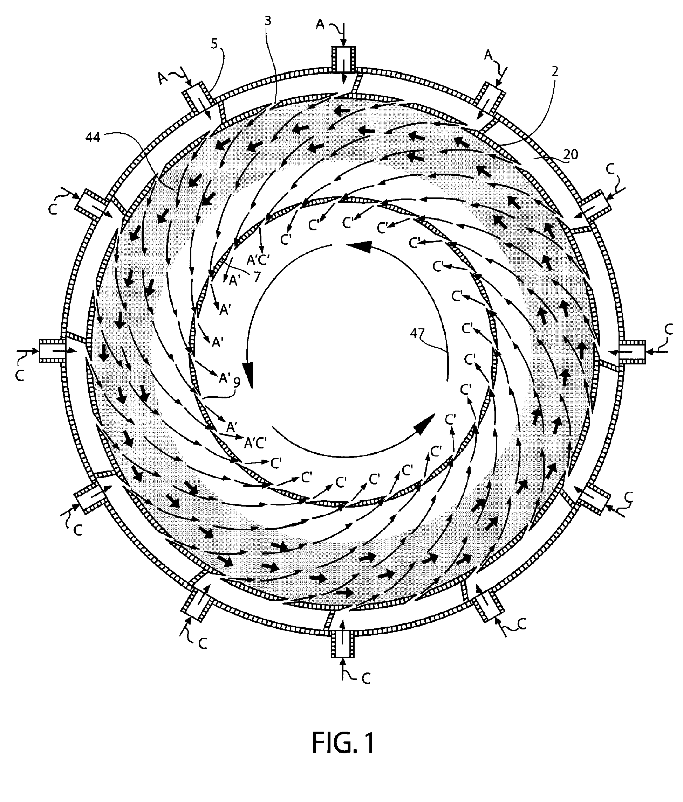

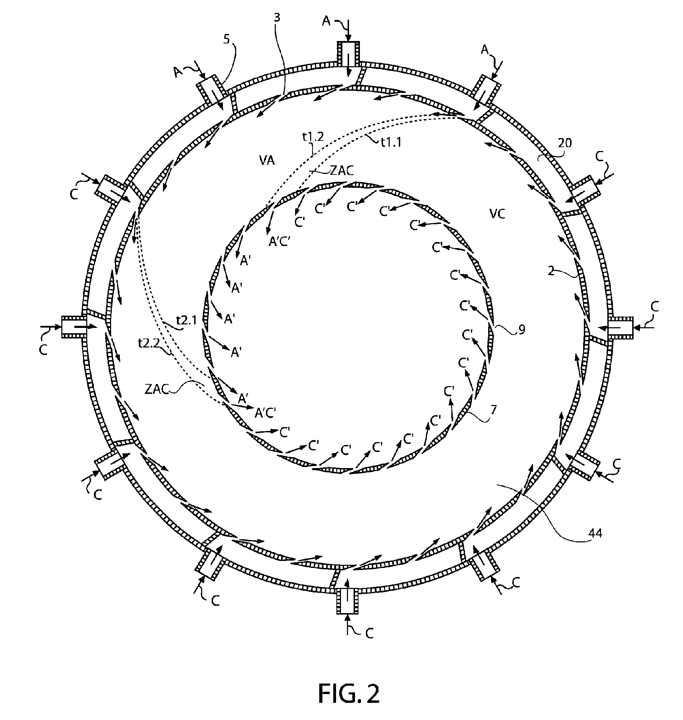

Tel dispositif peut être mis en oeuvre dans le cas ou les différents fluides réactifs sont compatibles et peuvent être séparés ultérieurement si nécessaire; tel fluides peuvent être évacués ensemble par une seule cheminée centrale à l'intérieur de laquelle les fluides sont mélangés. Par exemple, la paroi circulaire intérieure de la chambre annulaire délimitant tel cheminée centrale peut être fixe. En tel cas les fluides qui ont traversé le lit fluidifié sont évacués centralement en passant entre les ouvertures de sortie réparties le long de la paroi circulaire intérieure et les particules solides qui sont entraînées par les fluides sont repoussées dans la chambre annulaire par la force centrifuge. Alternativement, dans un autre exemple, la paroi circulaire intérieure de la chambre annulaire peut également être rotative. Elle peut par exemple comprendre une succession d'aubes tournant dans la même direction que la direction d'injection des fluides et donc dans le sens de rotation du lit fluidifié et de préférence plus rapidement. Les fluides qui ont traversé le lit fluidifié sont évacués centralement en passant entre les dites aubes et les particules solides qui sont entraînées par les fluides sont repoussées dans la chambre annulaire par la force centrifuge. Selon ce mode particulier de l'invention, les différents fluides réactifs évacués sont généralement mélangés à l'intérieur de la cheminée rotative. Les figures 1 et 2 représentent une section transversale schématique d'une chambre annulaire comprenant un dispositif d'évacuation des fluides au travers d'une cheminée centrale rotative ou fixe dans laquelle les différents fluides réactifs évacués sont mélangés. Les grandes flèches (47) dans ces figures peuvent symboliser la rotation de la paroi de la cheminée (7) si c'est une cheminée rotative, ou du fluide évacué, si la cheminée est fixe.

Dans un autre mode de réalisation, un dispositif selon la présente invention comprend une chambre annulaire dont la paroi circulaire intérieure est fixe et dans laquelle l'espace délimité par cette paroi est divisé en au moins deux chambres longitudinales d'évacuation, permettant d'évacuer séparément les fluides provenant des dites volumes de réaction, séparés par des volumes de séparation. Tel dispositif d'évacuation peut être mis en oeuvre dans le cas ou les différents fluides réactifs ne sont pas compatibles et doivent être évacués séparément. Le ou les fluides de séparation (B) sont mélangés aux autres fluides et évacués en même temps.

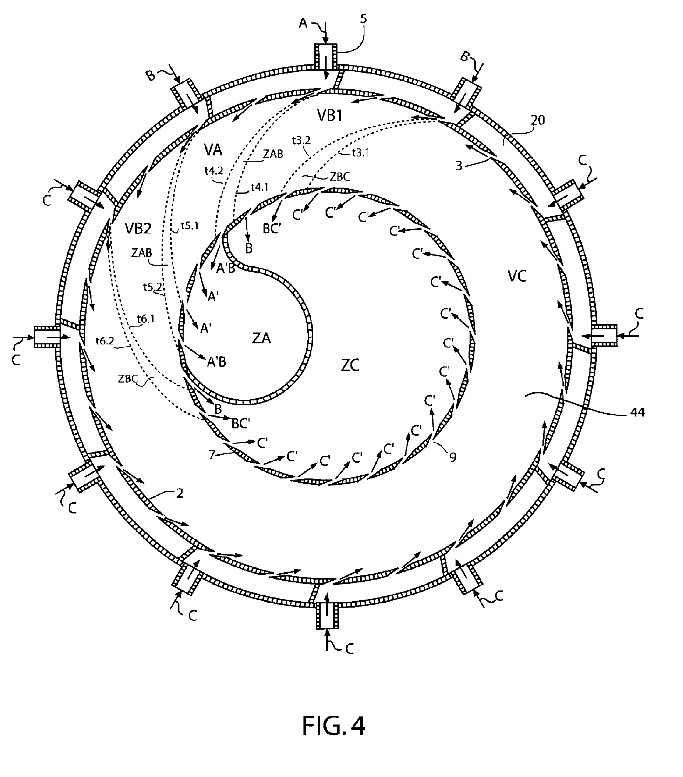

Dans un premier exemple de réalisation l'espace délimité par la paroi circulaire intérieure fixe est divisé en au moins deux chambres longitudinales d'évacuation, couvrant chacune la totalité de la surface d'évacuation des fluides (A ou C) et une partie des surfaces d'évacuation des fluides de séparation (B), ces zones étant séparées l'une de l'autre à l'aide d'une paroi ou ensemble de parois (107), par exemple une zone ZA destinée à évacuer une partie du fluide B et le fluide A', qui est le résultat de la transformation du fluide A après avoir traversé le lit fluidifié, et une zone ZC destinée à évacuer l'autre partie du fluide B et le fluide C', qui est le résultat de la transformation du fluide C après avoir traversé le lit fluidifié. Les **figures 3** et **4** représentent une section transversale schématique d'une chambre annulaire ayant tel dispositif d'évacuation comprenant une cheminée centrale fixe dans laquelle les différents fluides réactifs sont évacués séparément.

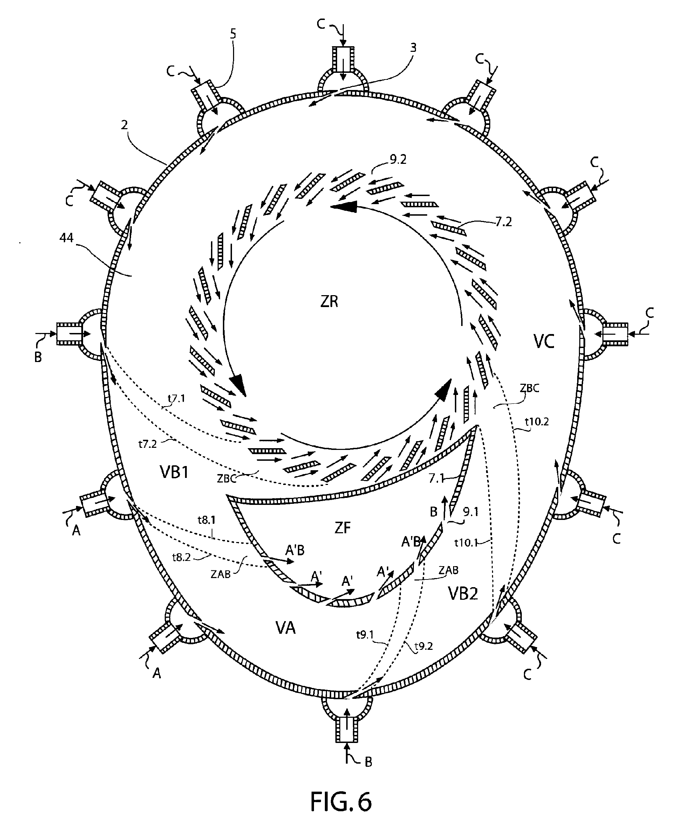

Dans un deuxième exemple de réalisation, le dispositif selon l'invention comprend une chambre annulaire dont les sections transversales ont une forme allongée et un dispositif d'évacuation des fluides comprenant au moins deux cheminées centrales, c'est-à-dire au moins deux chambres longitudinales d'évacuation, par exemple une cheminée ou chambre fixe et une cheminée ou chambre rotative, ou deux cheminées ou chambres fixes, disposées l'une à côté de l'autre. Par exemple, le dispositif selon l'invention comprend une chambre annulaire dont la section transversale a une forme allongée, par exemple ovale, et un dispositif central d'évacuation des fluides comprenant une cheminée centrale rotative qui permet d'évacuer un des fluides réactif et une cheminé centrale fixe, permettant d'évacuer l'autre fluide réactif. Dans tel cas, le ou les dits fluides de séparation sont mélangés et évacués avec les dits fluides réactifs. Tel dispositif permet d'évacuer un des fluides réactif au travers de la cheminée rotative, tout en assurant une bonne séparation entre les particules solides et le fluide évacué, et l'autre fluide réactif par la cheminée fixe. Afin d'assurer une bonne séparation entre les particules solides et l'autre fluide réactif par la cheminée fixe, celle-ci est localisée de préférence dans la partie de la chambre annulaire ayant le plus petit rayon de courbure. Les **figures 5** **et** **6** représentent une section transversale schématique d'une chambre annulaire de forme ovale comprenant un dispositif d'évacuation des fluides comprenant une cheminée fixe et une cheminée rotative.

Un dispositif selon l'invention comprend un dispositif d'alimentation de fluides, gazeux ou liquides, permettant d'alimenter séparément au moins trois fluides différents, comprenant au moins deux fluides réactifs (A, C) et un fluide de séparation (B) comprenant des injecteurs de fluides répartis le long de ladite paroi circulaire extérieure permettant d'injecter les fluides le long de cette paroi dans une direction ayant une composante principalement tangentielle. Selon un mode de réalisation le dispositif à lit fluidifié rotatif comprend un dispositif d'alimentation de fluides dans le quel les dits injecteurs de fluides comprennent des ouvertures d'entrée de fluide réparties le long de ladite paroi circulaire extérieure, reliées à des tubes fixés à l'extérieur de la paroi circulaire extérieure.

Selon un mode de réalisation, le dispositif selon l'invention est **caractérisé en ce qu'**il comprend également un dispositif permettant de modifier la position relative des surfaces longitudinales d'injection par rapport à la position des chambres (ou surfaces) longitudinales d'évacuation séparées. Par exemple, ledit dispositif peut comprendre un dispositif mobile d'alimentation de fluides.

Plus en particulier, selon un mode de réalisation le dispositif à lit fluidifié rotatif comprend un dispositif mobile d'alimentation de fluides permettant de relier lesdits tubes d'alimentation de fluides à différents volumes (surfaces) longitudinaux d'injection de fluides et donc de déplacer les positions relatives des différentes surfaces longitudinales d'injection de fluides par rapport à la position des volumes (chambres) longitudinaux d'évacuation des fluides en fonction des conditions opératoires.

Dans un autre mode de réalisation, le dispositif selon l'invention est **caractérisé en ce qu'**il comprend également un dispositif permettant de modifier la position relative des surfaces longitudinales d'évacuation par rapport à la position des volumes (ou surfaces) longitudinaux d'injection. Par exemple, ledit dispositif peut comprendre un dispositif mobile d'évacuation des fluides.

Plus en particulier, selon un autre mode de réalisation le dispositif à lit fluidifié rotatif comprend un dispositif mobile d'évacuation des fluides permettant de déplacer les positions relatives des différentes surfaces longitudinales d'évacuation de fluides par rapport à la position des dites volumes (surfaces) longitudinaux d'injection en fonction des conditions opératoires. Par exemple, la dite cheminée fixe peut être munie d'un dispositif permettant de déplacer les différentes surfaces (volumes) longitudinales d'évacuation, par exemple en tournant la cheminée centrale ou en ne tournant que la ou les cloisons de séparation (107) afin de modifier la position relative des dites surfaces (volumes) longitudinales d'évacuation et des dites surfaces (volumes) longitudinales d'injection. La présente invention prévoit donc dans un mode de réalisation un dispositif **caractérisé en ce que** la dite cheminée centrale est divisée en au moins deux chambres longitudinales d'évacuation séparées par une cloison ou un ensemble de cloisons mobiles et déplaçables.

En effet, la distance parcourue par les fluides depuis leur injection dans la chambre annulaire jusqu'à leur sortie de la chambre annulaire dépend des conditions opératoires, telles que le débit des fluides et la quantité et la vitesse des particules solides dans le lit fluidifié rotatif, mais les différents flux de fluides restent relativement bien séparés à l'intérieur de la chambre annulaire. Selon ce mode particulier de l'invention, il est donc nécessaire que le dispositif d'alimentation des fluides ou le dispositif d'évacuation des fluides puisse choisir, en fonction des conditions opératoires, les surfaces longitudinales à partir desquelles les fluides A et C sont injectés ou évacués et donc la distance qui sépare les ouvertures d'entrée des ouvertures de sortie débouchant sur le volume d'évacuation qui leur est réservée, afin de pouvoir les évacuer séparément au travers des zones d'évacuation distinctes. Le fluide de séparation, qui est de préférence un fluide non réactif pouvant être aisément séparé des fluides réactifs si nécessaire, se répartit entre les deux zones d'évacuation et assure la bonne séparation entre les flux des fluides principaux.

Selon un mode particulier de l'invention, le dispositif central d'évacuation du ou des fluides comprend un dispositif de refroidissement du ou des fluides évacués, comme par exemple, un dispositif de pulvérisation de fines gouttelettes d'un fluide de refroidissement qui peut se mélanger aux fluides évacués à l'intérieur de la cheminée centrale fixe ou rotative. Par « fluides de refroidissement » on entend des fluides qui permettent, par exemple par évaporation, de refroidir un fluide transformé évacué, comme par exemple de fines gouttelettes d'eau ou d'hydrocarbures légers tel que du propane ou des butanes liquides.

Tel dispositif est donc particulièrement intéressant lorsqu'il est nécessaire de chauffer rapidement le fluide réactif qui doit être transformé thermiquement et/ou catalytiquement à une température déterminée, généralement très élevée, en un temps très court et ensuite de le refroidir rapidement. La distance parcourue par les fluides entre leur injection dans la chambre annulaire et leur évacuation dans la cheminée centrale étant généralement relativement courte, la durée du cycle complet - chauffage, transformation et refroidissement-peut être d'au moins un ordre de grandeur inférieur à la seconde.

Le dispositif selon l'invention peut également comprendre un dispositif d'évacuation de particules solides de la chambre annulaire (44).

Ci-dessous quelques exemples de dispositifs selon la présente invention sont décrit en se référant aux dessins annexés.

La **figure 1** représente une section transversale schématique d'un exemple d'un dispositif cylindrique à lit fluidifié rotatif comprenant un dispositif d'alimentation de fluides permettant d'alimenter séparément deux fluides différents et un dispositif d'évacuation des fluides au travers d'une cheminée centrale. La figure montre une section transversale d'une chambre annulaire fixe (44), délimitée par une paroi circulaire extérieure (2) et intérieure (7) et ayant douze tubes d'alimentation (5) permettant d'y alimenter deux fluides (A, C) au travers de 24 injecteurs séparés (3) pour l'injection de fluide, symbolisés par des ouvertures d'entrée (3) reliées aux dits tubes (5) par des chambres d'alimentation séparées (20) entourant la paroi circulaire extérieure (2). Les fluides (A, C) sont injectés dans le sens des flèches minces et le lit fluidifié rotatif tourne dans le sens des flèches épaisses. Les fluides qui ont traversé le lit fluidifié rotatif, symbolisé par la zone grise, sont évacués de la chambre annulaire par l'espace à l'intérieur de la paroi circulaire intérieure (7), appelé aussi cheminée centrale. La cheminée peut être rotative dans le sens des grandes flèches (47), mais elle peut aussi être fixe, puisque dans cette illustration il n'est pas nécessaire que les fluides A' et C' soient évacués séparément.

Le dispositif d'alimentation des fluides de réaction (A et C) choisit d'alimenter le fluide A dans la chambre annulaire au travers de trois tubes (5) reliés à des chambres d'alimentations (20) comprenant chacune plusieurs fentes d'entrée (3). Le fluide de réaction C est alimenté par toutes les autres ouvertures d'entrée. Les dimensions relatives et/ou le nombre de sections longitudinales utilisées pour l'injection des différents fluides dépendent de leurs propriétés et de leurs débits respectifs. Dans l'exemple représenté aux **figures 1-2** le fluide A et C sont injectés au travers de surfaces longitudinales de respectivement 3 et 9/12^{ème} de tours. Les fluides de réaction (A, C) sont injectés séparément dans des volumes longitudinaux d'injection différents (VA, VC) de la dite chambre de réaction annulaire, comme illustré à la **figure 2****.**

La **figure 2** illustre des courbes (t1.1, t1.2, t2.1, t2.2) qui sont légèrement divergentes et chevauchent les sorties de fluide (9) A'C'. Ces courbes sont les sections transversales de surfaces courbes qui s'étendent longitudinalement approximativement perpendiculairement au plan de la figure. Elles représentent les sections transversales des surfaces de transition. Les surfaces de transition délimitent des volumes étroits de transition (ZAC), qui séparent les volumes de réaction VA et VC ou les fluides A et C se mélangent.

Dans cet exemple, les fluides évacués, c'est-à-dire le fluide (A'), qui est le résultat de la transformation du fluide (A), et le fluide (C'), qui est le résultat de la transformation du fluide (C), peuvent être mélangés. Il n'est donc pas nécessaire de diviser la cheminée centrale en volumes longitudinaux séparés. Dans ce cas la paroi circulaire intérieure (7) peut être rotative, comme dans le dispositif d'évacuation de fluide avec cheminée rotative décrit dans la demande de brevet WO2007/122211.

Dans un autre exemple de dispositif, représenté à la **figure 3****,** les fluides évacués, c'est-à-dire le fluide A', et le fluide C' ne peuvent pas être mélangés. Dans la figure 3, les fluides (A, B, C) sont injectés dans une chambre annulaire fixe (44), délimitée par une paroi circulaire extérieure (2) et intérieure (7) et ayant douze tubes (5) d'alimentation permettant d'y alimenter trois fluides (A, B et C) au travers de 24 injecteurs de fluide, symbolisées par des ouvertures d'entrée (3) répartis le long de la paroi circulaire extérieure (2) de la chambre permettant et reliées aux dits tubes (5) par des chambres d'alimentation (20) séparées entourant la paroi circulaire intérieure (7). Les fluides sont injectés le long de cette paroi dans une direction ayant une composante principalement tangentielle, donc dans le sens des flèches minces et le lit fluidifié rotatif, tournant dans le sens des flèches épaisses, est symbolisé par la zone grise.

Les fluides traversent le lit fluidifié en tournant approximativement à la même vitesse que les particules solides et ils atteignent les ouvertures de sortie (9) de la paroi circulaire intérieure (7) après avoir parcouru une certaine distance qui dépend de l'épaisseur du lit fluidifié rotatif, de la vitesse de rotation des particules solides et du débit des fluides. Dans l'exemple décrit, cette distance est en moyenne d'environ 1/6^{ème} de tour. La cheminée centrale est divisée en deux chambres longitudinales d'évacuation ZA et ZC, séparés par une paroi (107).

Le dispositif d'alimentation du fluide de réaction A choisit de l'alimenter dans la chambre annulaire à partir du tube (5) relié à deux fentes d'entrée (3), situées à environ 1/6^{ème} de tour des ouvertures de sorties (9) débouchant sur le volume ZA. Le fluide B, appelé fluide de séparation, est alimenté par les tubes (5) reliés aux ouvertures d'entrée (3) situées de part et d'autre du fluide A, et le fluide de réaction C est alimenté par toutes les autres ouvertures d'entrée (3).

Les dimensions relatives et/ou le nombre de sections longitudinales utilisées pour l'injection des différents fluides dépendent de leurs propriétés et de leurs débits respectifs. Dans l'exemple représenté aux **figures 3** et **4** les fluides A, B et C sont injectés au travers de surfaces longitudinales de respectivement 1, 2 et 9/12^{ème} de tours. Les fluides de réaction (A, C) sont injectés séparément dans des volumes longitudinaux d'injection différents (VA, VC) de la dite chambre de réaction annulaire, séparées l'un de l'autre par deux volumes longitudinaux de séparation différents (VB1, VB2), où est alimenté le fluide de séparation (B) comme illustré à la **figure 4****.**

Dans la mesure où les conditions opératoires sont telles que les fluides parcourent effectivement environ 1/6^{ème} de tour avant d'être évacué, la quasi-totalité du fluide A', qui est le résultat de la transformation du fluide A en traversant le lit fluidifié, est évacuée au travers de la zone ZA et la quasi-totalité du fluide C', qui est le résultat de la transformation du fluide C en traversant le lit fluidifié, est évacuée au travers du volume ZC. Le fluide B, qui est de préférence un fluide non réactif, est réparti entre les deux volumes d'évacuation.

Si les conditions opératoires sont modifiées de manière telle que les fluides parcourent par exemple environ ¼ de tour au lieu de 1/6^{ème} de tour avant d'être évacués, l'alimentation des fluides A et B doit être déplacée de 1/12^{ème} de tour pour augmenter la distance entre leurs ouvertures d'entrée et les ouvertures de sortie permettant de pénétrer dans la zone ZA. Ce déplacement peut être fait en choisissant les tubes d'entrées adéquatement localisés ou en tournant de 1/12^{ème} de tour la cheminée fixe ou l'ensemble des chambres d'alimentation, ou la ou les cloisons (107) à l'aide d'un dispositif permettant de modifier leur position relative.

Sur la **figure 4****,** les courbes t3.1 et t3.2, t4.1 et t4.2, t5.1 et t5.2, t6.1 et t6.2 sont les sections transversales de surfaces courbes qui s'étendent longitudinalement approximativement perpendiculairement au plan de la figure et qui séparent les volumes VC/VB1, VB1/VA, VA/VB2 et VB2/VC, respectivement. Ces courbes sont légèrement divergentes et délimitent des zones ou volumes de transition (ZBC ou ZAB). Les volumes VA, VB1, VB2 et VC sont donc séparées par des volumes étroits de transition (ZBC ou ZAB) où les fluides B et C ou A et B se mélangent, respectivement.

En fonctionnement, les conditions opératoires variant normalement autour de conditions moyennes, ces surfaces courbes et volumes de transitions se déplacent légèrement autour de leur position moyenne. La largeur des volumes de séparation VB1 et VB2 doit être de préférence plus grande que les variations de position des zones de transition résultant des variations opératoires normales.

Les sections transversales de la paroi circulaire intérieure et extérieure de la chambre annulaire représentées aux **figures 1 à 4** sont des circonférences. Cependant, la paroi circulaire intérieure et extérieure de la chambre annulaire peut être de forme générale cylindrique, elliptique, conique ou polygonale ou avoir une autre forme avec des courbures diverses pouvant comprendre des parties concaves. Par exemple sa surface intérieure peut être polygonale ou ondulée et la forme de ses sections transversales peut être elliptique ou même avoir la forme de la section d'un oeuf ou d'une banane. Sa section transversale ne doit pas nécessairement être constante. Par exemple elle peut diminuer progressivement. Dans ce cas, si elle est cylindrique ou polygonale, on peut la définir comme formant un cône ou une pyramide tronquée.

Les fluides traversent le lit fluidifié en tournant approximativement à la même vitesse que les particules solides et ils atteignent les ouvertures de sortie (9) de la paroi circulaire intérieure (7) après avoir parcouru une certaine distance qui dépend de l'épaisseur du lit fluidifié rotatif, de la vitesse de rotation des particules solides et du débit des fluides. Dans les dispositifs illustrés aux figures 1 à 4, cette distance est en moyenne d'environ 1/6^{ème} de tour. Ces exemples sont donnés à titre purement indicatif.

La **figure 5** montre un autre exemple d'une section transversale d'une chambre annulaire dont la paroi circulaire extérieure (2) est de forme ovale. Le dispositif est muni de douze injecteurs de fluides (5) répartis le long de la paroi circulaire extérieure (2) de la chambre permettant d'injecter trois fluides (A,B,C) le long de cette paroi dans une direction ayant une composante principalement tangentielle. La cheminée centrale d'évacuation des fluides est divisée en deux parties indépendantes, c'est-à-dire deux chambres d'évacuation indépendantes: une partie ou chambre rotative, ZR, de forme cylindrique, tournant (flèche 47) dans le même sens que le lit fluidifié et une partie ou chambre fixe, ZF, localisée à côté de la partie rotative, dans la zone allongée de l'ovale. La partie fixe ZF est destinée à évacuer un des fluides de réaction, de préférence celui dont le débit est le plus petit, soit le fluide A dans cet exemple. Il est donc nécessaire que le dispositif d'alimentation de ce fluide A puisse choisir, en fonction des conditions opératoires, la ou les ouvertures d'entrée (3) situées dans les volumes longitudinaux d'injection situées à la distance adéquate des ouvertures de sortie (9.1) de la partie fixe ZF.

Dans ce dispositif, la cheminée rotative peut tourner (flèche 47) plus vite que le lit fluidifié, ce qui peut permettre d'augmenter la vitesse de rotation du lit fluidifié et d'améliorer la séparation des fluides et des solides.

Les ouvertures de sortie (9.1) de la partie fixe sont situées de préférence dans la zone à plus petit rayon de courbure, ce qui améliore également la séparation des solides et des fluides.

Dans le présent exemple, la quasi-totalité du fluide A', qui est le résultat de la transformation du fluide A en traversant le lit fluidifié, est évacuée au travers d'une chambre d'évacuation fixe ZF et la quasi-totalité du fluide C', qui est le résultat de la transformation du fluide C en traversant le lit fluidifié, est évacuée au travers d'une chambre d'évacuation rotatif ZR. Le fluide B, qui est de préférence un fluide non réactif, est réparti entre ces deux chambres d'évacuation. Les courbes t7.1 et t7.2, t8.1 et t8.2, t9.1 et t9.2, t10.1 et t10.2 sont les sections transversales de surfaces courbes qui s'étendent longitudinalement approximativement perpendiculairement au plan de la figure et séparent respectivement les volumes VC/VB1, VB1/VA, VA/VB2 et VB2/VC. Ces courbes sont divergentes et délimitent des volumes de transition (ZBC ou ZAB). Les volumes VC, VB1, VB2 et VA sont donc séparées par des volumes étroits de transition (ZBC ou ZAB) où les fluides B et C ou A et B se mélangent, respectivement.

### UTILISATIONS

Les dispositifs de la présente invention peuvent être utilisés de manière avantageuse dans des procédés de transformation thermique et/ou catalytique d'un fluide C à l'aide d'un lit fluidifié rotatif.

Les dispositifs selon l'invention sont particulièrement intéressant pour les procédés de transformation thermique et/ou catalytique d'un fluide, de préférence à l'état gazeux, nécessitant de porter le dit fluide à une température relativement élevée en un temps très court et de l'y maintenir pendant la durée de la réaction, de préférence très courte, et plus particulièrement lorsque la réaction est très endothermique, comme la déshydrogénation catalytique d'hydrocarbures comme de l'éthylbenzène ou du propane ou du butane, le craquage thermique et/ou catalytique d'hydrocarbures lourds ou légers ou d'essences lourdes de cracking.

Les dispositifs selon l'invention sont également particulièrement intéressants pour les procédés de transformation catalytique d'un fluide nécessitant une régénération continue du catalyseur comme le craquage d'hydrocarbures lourds et la déshydrogénation catalytique d'hydrocarbures comme de l'éthylbenzène ou du propane ou du butane par oxydoréduction. En effet, les particules catalytiques peuvent être en contact plusieurs fois par seconde avec le fluide régénérant, généralement de l'oxygène, permettant de brûler le carbone qui s'est déposé sur les catalyseurs dans le premier cas ou de réoxyder le catalyseur qui a été réduit par l'hydrogène produit dans le deuxième cas, ce qui permet de les garder en permanence dans des conditions optimum de régénération et de température.

Généralement la régénération du catalyseur génère également les calories nécessaires au maintien du lit fluidifié et donc du fluide à transformer qui traverse le lit fluidifié, à la température souhaitée. Un apport supplémentaire de calories peut être obtenu, si nécessaire, en injectant un autre fluide réactif ou combustible en même temps ou à proximité du fluide de régénération, comme par exemple de l'hydrogène ou du méthane.

Les particules solides du lit fluidifié rotatif, pouvant être ou contenir des catalyseurs, peuvent être chauffées et/ou régénérées par des réactions exothermiques dans le volume longitudinal du lit fluidifié qui est traversée par un fluide réactif A. La chaleur emmagasinée par les particules solides peut ensuite être cédée au fluide C dans le volume du lit fluidifié traversée par ce fluide C, ce qui permet de le réchauffer et/ou de le maintenir à la température optimum pour assurer sa transformation au travers de réactions généralement endothermiques.

L'apport de chaleur peut être obtenu en préchauffant le fluide A et/ou à l'aide de réactions chimiques entre le fluide A et les particules solides, par exemple par l'oxydation du carbone déposé sur les solides par le fluide C lors de sa transformation ou par l'oxydation de métaux qui ont été réduits par le fluide C lors de sa transformation, et/ou par la réaction entre différents composants du fluide A qui peut être un mélange de fluides contenant par exemple de l'oxygène et du méthane ou de l'hydrogène. Ces différents composants peuvent être injectés séparément, mais à proximité l'un de l'autre, à l'intérieur du même volume longitudinal de la chambre annulaire.

La densité des particules solides multipliée par leur vitesse de rotation pouvant être de plus d'un ordre de grandeur supérieur à la densité du fluide multipliée par sa vitesse radiale moyenne, la circulation des particules solides, au travers des différents volumes longitudinaux de la chambre annulaire, peut être d'un à deux ordres de grandeur supérieurs au débit du fluide C, qui est le fluide à transformer.

Comme le transfert de chaleur entre les solides et les fluides à l'intérieur d'un lit fluidifié rotatif peut être particulièrement rapide, ceci peut permettre d'augmenter la température du fluide C de plus d'une centaine de degrés, en un temps très court, de l'ordre de quelques millisecondes, et de le maintenir approximativement à cette température pendant la durée de sa traversée du lit fluidifié, même si sa transformation est très endothermique, avec des variations relativement faibles, de l'ordre de quelques degrés, de la température des particules solides.

A cet avantage, s'ajoute les avantages des lits fluidifiés rotatifs, qui peuvent être traversés par de très grands flux de fluides en un temps très court, pouvant être inférieur au dixième de seconde, avec un très bon contact entre les fluides et les particules solides dont la taille peut être sensiblement plus petite que dans les lits fluidifiés classiques.

Les dispositifs tels que ceux décrits dans les figures 1 à 6 peuvent être également utilisés avantageusement pour la transformation catalytique d'un fluide C par des réactions exothermiques, nécessitant de maintenir le fluide à une température suffisamment basse. Dans ce cas, le fluide A doit refroidir les particules solides du lit fluidifié rotatif, par exemple par l'évaporation de fines gouttelettes d'un liquide de refroidissement.

Les dispositifs selon l'invention dont la cheminée centrale n'est pas divisée en volumes longitudinaux séparés permettant d'évacuer séparément les fluides A' et C', (voir par exemple les figures 1-2) peuvent aussi être utilisés avantageusement dans des procédés de transformation thermique et/ou catalytique d'un fluide C, si les produits de la transformation du fluide A n'affectent pas sensiblement la qualité désirée du fluide C'.

Par exemple pour le craquage thermique et/ou catalytique d'hydrocarbures légers, comme le naphte ou le propane, le fluide A peut être composé d'un mélange de vapeur d'eau et d'oxygène avec un excédent d'hydrogène. Dans ce cas, si la quantité de carbone déposée sur les particules solides est très faible, le fluide A' peut ne plus contenir d'oxygène et seulement des quantités négligeables d'oxydes de carbone. Il peut donc être mélangé avec les hydrocarbures craqués.

Et si la quantité des composants indésirables, comme par exemple les oxydes de carbone, est trop élevée, il est généralement possible d'éviter les réactions indésirables en refroidissant très rapidement les fluides évacués. Dans ce cas l'élimination des composants indésirables peut être faite ultérieurement.

### Exemples

### Exemple 1 : Simulation du transfert de chaleur

Un réacteur polygonal de 0.54 m de diamètre et 0.1 m de long, avec une chambre annulaire de 0.04m d'épaisseur, comprenant 36 fentes longitudinales d'injection de gaz, avec un débit total d'air de 0.4m³/s et des billes de verre de 70 microns de diamètre produisant un lit fluidifié rotatif très dense, d'environ 0.02m d'épaisseur, tournant à environ 20 rotations par seconde. De l'air chauffé à 2.000°C a été alimenté par 4 fentes longitudinales consécutives, les autres fentes étant alimentées par de l'air à 20°C.

La vitesse interstitielle radiale moyenne du gaz au travers du lit fluidifié étant d'environ 5m/s, son temps de résidence moyen à l'intérieur du lit fluidifié est d'environ 4ms. Les résultats de la simulation montrent que le gaz chaud cède la quasi-totalité de sa chaleur aux solides durant la première milliseconde. Les solides sont chauffés progressivement à un rythme initial d'environ 20°C/s ou 1 °C/rotation et ils cèdent une partie de leur chaleur aux gaz froids qui sont chauffés au même rythme.

Ce rythme décroît progressivement au fur et à mesure que la température du lit augmente et donc que la chaleur cédée aux gaz froids augmente, jusqu'à la température d'équilibre où la chaleur cédée est égale à la chaleur reçue, soit d'environ 240°C dans cet exemple.

La température du lit fluidifié et des gaz évacués s'élève progressivement de manière très uniforme, avec des écarts de température inférieurs à 1° en dehors de l'espace très proche (quelques mm) des fentes d'injection du gaz brûlant. Elle se stabilise à la température d'équilibre.

Cet exemple montre qu'il est possible de chauffer uniformément un lit fluidifié rotatif et donc d'augmenter la température du fluide qui le traverse, de plus de 200°C dans cet exemple, en ne chauffant qu'une petite zone du lit fluidifié, par exemple avec un gaz très chaud ou à l'aide d'une réaction très exothermique, par exemple la combustion d'oxygène et d'hydrogène. Il est donc possible de compenser les pertes de chaleur dues aux réactions endothermiques et donc de maintenir la température du fluide réactif à celle du lit fluidifié rotatif.

A contrario, il est possible de refroidir le lit fluidifié, par exemple en évaporant un fluide de refroidissement au contact des particules solides chaudes, et de compenser la production de chaleur due aux réactions exothermiques et donc de maintenir la température du fluide réactif à celle du lit fluidifié rotatif.

Une simulation avec une conductivité thermique des solides réduite d'un facteur 8 ne montre pratiquement pas de différence quant à l'homogénéité de la température des gaz, ce qui confirme la qualité supérieure du transfert de chaleur entre les gaz et les solides à l'intérieur des lits fluidifiés rotatifs denses.

### Exemple 2 : Simulation de la séparation des fluides et du transfert de chaleur

L'injection de différents gaz dans une chambre annulaire fixe de respectivement 0.36 et 0.2m de diamètre extérieur et intérieur, munie de 24 fentes d'alimentation et d'évacuation de gaz a été simulée. Un gaz A est injecté au travers de deux fentes consécutives entourées de chaque côté par deux fentes alimentées par un gaz de séparation, B, et les 18 autres fentes sont alimentées par un gaz C. La température des gaz A et B est de 2020°C, tandis que la température du gaz C est de 20°C. Des particules solides de 300 microns sont introduites progressivement dans la chambre annulaire afin de former un lit fluidifié dense de plus en plus épais et de mesurer son influence sur l'écoulement des fluides.

Avant l'introduction des solides, les gaz parcourent en moyenne environ ¾ de tours dans la chambre annulaire et se mélangent entre eux avant d'être évacués à une température moyenne de 520°C.

Dès que les solides sont introduits et qu'un lit fluidifié rotatif mince est formé, le trajet des fluides à l'intérieur de la chambre annulaire est réduit à environ ¼ de tours. La température des solides augmente très rapidement (environ 300°C en ½ sec). A cet instant, les gaz chauds, partiellement mélangés aux gaz froids, sont évacués à une température moyenne légèrement inférieure à 500°C par les 12 fentes décalées d'environ 90° par rapport aux fentes d'injection et la température d'évacuation des gaz par les 12 fentes restantes est légèrement inférieure à la température des solides d'environ 300°C. Ceci indique que l'épaisseur du lit fluidifié de quelques mm est trop mince pour absorber/céder la totalité des calories/frigories disponibles des gaz chauds/froids. Environ 99% du gaz A est évacué par les 6 sorties décalées d'environ 90° par rapport aux 2 fentes d'injections du gaz A et 99% du gaz B est évacué par les 12 fentes également décalées, ce qui indique une relativement bonne séparation entre les différents flux de fluide.

Après 5 secondes le lit fluidifié atteint une épaisseur moyenne d'environ 0.02m. La température des gaz et des solides devient relativement uniforme, aux environs de 380°C seulement, car les solides n'ont pas encore atteint leur t° d'équilibre de 520°C. L'écart de t° entre les solides et les gaz est pratiquement partout inférieur à 1 °C, sauf à proximité des injecteurs.

Les gaz sont évacués après avoir parcouru en moyenne ¼ de tour seulement et leur séparation est très bonne. Par exemple la quasi-totalité du gaz A est évacuée par les 6 sorties décalées de 45° et ne contenant que des traces du gaz C. La concentration du gaz A n'est que de 100ppm dans les sorties adjacentes et moins de 1 ppm au-delà.

Avec un lit fluidifié deux fois plus épais, d'environ 0.04m d'épaisseur, le trajet des fluides est très légèrement plus court et leur séparation est légèrement améliorée.

Cette simulation montre qu'il est possible de séparer le gaz A du gaz C à l'aide de l'injection d'un gaz de séparation B, qui est évacué en même temps que les deux autres gaz qui peuvent être évacués séparément. Elle ne tient pas compte de l'effet des parois latérales qui diminue localement la vitesse de rotation du lit fluidifié et des gaz. Des précautions particulières sont nécessaires pour éviter la contamination du gaz C par du gaz A. Par exemple, l'injection du gaz A peut être remplacée par l'injection du gaz de séparation B à proximité des parois latérales.

### Exemple 3: Autre exemple de simulation de la séparation des fluides et du transfert de chaleur

Un réacteur polygonal de 0.54m de diamètre et 0.1m de long, comprenant 36 fentes longitudinales d'injection de gaz et 9 ouvertures longitudinales d'évacuation a été simulé avec un débit total de gaz (de l'air) et des billes de verre de 300microns de diamètre afin d'obtenir un lit fluidifié rotatif relativement compact, d'environ 3cm d'épaisseur, tournant à environ 20 rotations par seconde. De l'air chauffé à 2000°C a été alimenté par 4 fentes longitudinales consécutives. La température du lit fluidifié et des gaz évacués s'est élevée progressivement de manière uniforme. Après 4 secondes, la température moyenne des solides et des gaz évacués avait augmenté de près de 70°C, avec des écarts de température inférieurs à 1° en dehors de l'espace très proche des fentes d'injection du gaz brûlant. La température d'équilibre théorique est d'environ 200°C en l'absence de pertes calorifiques.

### Exemple 4 : Procédé d'oxydoréduction

Le dispositif selon l'invention peut être utilisé pour un procédé catalytique d'oxydoréduction, par exemple pour la déshydrogénation catalytique d'hydrocarbures comme de l'éthylbenzène, du propane ou du butane, respectivement en styrène, propylène ou butène, avec l'oxydation de l'hydrogène produit par un oxyde métallique qui doit être continuellement régénéré. Le fluide A peut être de l'oxygène pur, éventuellement mélangé à de la vapeur d'eau, le fluide B est de la vapeur d'eau surchauffée et le fluide C est un hydrocarbure comme de l'éthylbenzène, du propane ou du butane, éventuellement mélangé à de la vapeur d'eau surchauffée. Les particules solides contiennent le catalyseur de déshydrogénation et un oxyde métallique qui peut être réduit par l'hydrogène libéré par la déshydrogénation de l'hydrocarbure. Le métal réduit est réoxydé lorsqu'il passe devant les injecteurs du fluide A contenant de l'oxygène pour être réduit à nouveau par l'hydrogène produit dans le volume où l'hydrocarbure est injecté et catalytiquement déshydrogéné.

L'oxygène permet également d'oxyder les quantités de carbone, généralement très petites, qui se sont déposées sur le catalyseur et donc de le régénérer de manière continue.

L'oxydation du métal, du carbone et de l'hydrogène produit de la chaleur qui compense les pertes de chaleur dues aux réactions endothermiques de déshydrogénation et de réduction. La chaleur produite par le fluide A peut être augmentée si nécessaire en y ajoutant un supplément d'oxygène et un excédent d'hydrogène afin de faire réagir la totalité de l'oxygène libre présent dans le fluide A. Ceci peut permettre d'augmenter significativement et en un temps très court la température du lit fluidifié et donc aussi de l'hydrocarbure qui le traverse, ce qui permet de réduire, voire de supprimer la quantité de vapeur surchauffée qu'il faut généralement ajouter à l'hydrocarbure. Ceci permet de réduire substantiellement le volume de fluide injecté et donc la taille du réacteur.

Par exemple, un réacteur de 1,2m de diamètre et 1m de long peut être parcouru par un lit fluidifié catalytique dense de 10cm d'épaisseur, tournant à une vitesse de 20m/s, soit un peu plus de 5tours par seconde.Les 2/3 de ce lit peuvent être traversé par exemple par un flux d'éthylbenzène pur et 1/9 par un mélange d'oxygène, d'hydrogène et de vapeur d'eau, les 2/9 restant étant traversé par de la vapeur d'eau surchauffée, afin d'isoler le volume d'oxydation du volume de déshydrogénation et de réduction.

Le lit catalytique fluidifié est réchauffé dans le volume d'oxydation et refroidi dans le volume de déshydrogénation.

Si le lit fluidifié est à une pression voisine de la pression atmosphérique et à une température élevée, par exemple 650°C, la densité de l'éthylbenzène y est d'environ 1,5kg/m³. Si le flux d'éthylbenzène est d'environ 12m³/s ou 18kg/s ou 65tonnes/heure, sa vitesse interstitielle radiale moyenne est d'environ 10m/s et son temps de résidence moyen dans le lit fluidifié est de 10msec.

Si la densité du lit fluidifié est d'environ 1tonne/m³, la circulation des solides est de 1,8tonnes/sec, soit 100 fois plus élevée que le débit d'éthylbenzène. Ce rapport très élevé permet au lit fluidifié de céder une quantité de calories correspondant à une élévation de température du fluide de 200°C, avec une variation de la température du lit fluidifié de l'ordre de quelques degrés. Ceci permet donc de réaliser la déshydrogénation à une température quasiment constante.

La quantité d'oxygène et d'hydrogène à injecter dans le volume de réchauffage est déterminée par la température qu'il faut donner au lit fluidifié.

Dans ce procédé, l'oxygène injecté est finalement transformé en vapeur d'eau. Il n'est donc pas nécessaire de séparer les fluides évacués par la cheminée centrale. Celle-ci peut donc être rotative si nécessaire.

### Exemple 5 : Procédé de craquage catalytique d'essences lourdes de cracking

Les essences lourdes de cracking catalytique sont des sous produits peu désirables du craquage catalytique d'hydrocarbures lourds. Elles peuvent être partiellement converties en oléfines plus légères, de préférence en propylène et en éthylène à l'aide d'une réaction catalytique très endothermique, pouvant abaisser la température du fluide d'une centaine de degré. Le catalyseur doit être régulièrement régénéré, mais la quantité de carbone qui se dépose sur le catalyseur n'est pas suffisante pour apporter les calories nécessaires à la réaction. La température de sortie du fluide doit être très élevée, d'environ 600°C, afin de produire une quantité significative de propylène et d'éthylène. Il est donc nécessaire de préchauffer les essences lourdes à plus de 650°C, ce qui est une opération coûteuse.

Un réacteur semblable à celui de l'exemple ci-dessus peut être avantageusement utilisé. Il permet de préchauffer la charge de craquage à moins de 600°C, dans la mesure où la température du lit fluidifié peut être maintenue à la température souhaitée en injectant dans le volume longitudinal de réchauffage du lit fluidifié rotatif de l'oxygène qui régénère le catalyseur et aussi un gaz combustible, comme de l'hydrogène ou du méthane, en quantité suffisante pour apporter les calories nécessaires au chauffage de la charge de cracking et à la compensation de pertes de calories dues aux réactions endothermiques.

Il est généralement préférable d'évacuer séparément les oxydes de carbones produits dans le volume de réchauffage, si la quantité produite n'est pas négligeable. Dans ce cas, il est nécessaire d'adopter les schémas décrits dans les **figures 3-6** et de pouvoir choisir la surface d'injection de l'oxygène en fonction des conditions opératoires, afin de pouvoir évacuer la quasi-totalité des oxydes de carbone dans le volume longitudinale d'évacuation prévue à cet effet et ainsi d'éviter de les mélanger au fluide transformé.

### Exemple 6 : Craquage thermique et/ou catalytique du naphte

Le craquage thermique du naphte pour fabriquer de l'éthylène et du propylène nécessite des températures très élevées, pouvant être supérieure à 800°C, ce qui nécessite des fours extrêmement coûteux et la dilution du naphte avec de la vapeur d'eau pour éviter le dépôt trop rapide de carbone sur les tubes des fours.

Un réacteur semblable à celui des exemples ci-dessus peut être avantageusement utilisé. Les particules solides du lit fluidifié peuvent être maintenues à une température de plus de 800°C en injectant dans le volume de réchauffage la quantité suffisante d'un mélange d'un fluide combustible, de préférence de l'hydrogène, et d'oxygène, éventuellement dilué par de la vapeur d'eau. Ceci permet d'alimenter le volume de réaction par du naphte pur, préchauffé à moins de 600°C.

Si le rapport entre la circulation des solides catalytiques et de la quantité de naphte alimenté est de 100, la température du lit fluidifié ne baissera que de quelques degrés, tandis que celle du naphte augmentera de plus de 200°C en un temps inférieur au dixième de seconde grâce au très bon contact gaz solides obtenus dans les lits fluidifiés rotatifs.

La quantité de carbone se déposant sur le catalyseur étant très petite, la quantité d'oxydes de carbone produits est très petite. Il n'est donc pas indispensable de séparer les gaz avant leur évacuation, si les fluides transformés sont refroidis très rapidement dès qu'ils pénètrent dans la cheminée centrale, ce qui est généralement nécessaire pour éviter des réactions indésirables entre radicaux libres durant la période de refroidissement. Toutefois si le gaz de réchauffage contient du carbone, par exemple du méthane, il peut être préférable de séparer les gaz avant leur évacuation, ce qui nécessite d'avoir un volume longitudinal séparé pour l'évacuation des gaz de combustion, et de pouvoir choisir la surface d'injection de l'oxygène en fonction des conditions opératoires, comme cela est décrit dans la description des **figures 3-6****.**

### Exemple 7 : Craquage catalytique d'hydrocarbures lourds

Le craquage catalytique d'hydrocarbures lourds est généralement obtenu dans des unités comprenant un réacteur et un régénérateur de très grandes dimensions et reliés entre eux par un "riser" et un "stand pipe". La poudre catalytique quitte le régénérateur à une température très élevée et est entraînée vers le réacteur par la charge de craquage qui est injectée à grande vitesse dans le "riser" et qui, en se réchauffant et en se transformant refroidi la poudre catalytique. Cette dernière est séparée du gaz dans le réacteur et retourne dans le régénérateur au travers du "stand pipe" grâce à la gravité. La poudre catalytique est ensuite régénérée et réchauffée par l'oxydation du carbone déposé lors le craquage des hydrocarbures lourds à l'intérieur du régénérateur qui est traversé par un flux de gaz contenant de l'oxygène.

L'ensemble de ces opérations peut être réalisé dans un dispositif selon l'invention avec une seule chambre annulaire de beaucoup plus petites dimensions. La force centrifuge due à la rotation du lit fluidifié rotatif permet d'assurer une bonne séparation entre les différents flux de gaz et les particules solides de très petites dimensions, tout en permettant de faire traverser le lit fluidifié par de très grandes quantités de gaz. L'épaisseur du lit fluidifié rotatif étant relativement petite par rapport à sa circonférence, il peut être divisé en deux volumes longitudinaux bien séparés l'un de l'autre, l'un qui est traversée par les hydrocarbures lourds pour leur craquage catalytique et l'autre qui est traversée par de l'oxygène pour la régénération et le réchauffage de la poudre catalytique. Ces deux volumes sont clairement séparés par des volumes de séparation qui sont traversées par de la vapeur d'eau qui chasse le fluide alimenté dans une des deux volumes avant de pouvoir atteindre l'autre volume.

Le rapport entre la circulation de la poudre catalytique et le débit de la charge de craquage étant d'au moins un ordre de grandeur supérieur à celui qui est obtenu dans les unités de craquage catalytique classiques, les variations de température de la poudre catalytique entre les différents volumes sont d'au moins un ordre de grandeur inférieure aux différences de température obtenues dans les unités de craquage catalytique classiques. Ceci peut permettre de travailler dans des zones de températures plus précises et donc plus sélectives.

De même, la quantité de carbone qui se dépose sur la poudre catalytique entre deux régénérations est aussi d'un ordre de grandeur plus petite. Et, comme la vitesse de rotation du lit fluidifié rotatif peut être de plusieurs tours par seconde, les temps de séjours successifs des particules solides dans les différents volumes sont très courts, ce qui permet de régénérer la poudre catalytique de manière quasiment continue, et ainsi de maintenir le catalyseur dans des conditions optimum de fonctionnement.

Ces caractéristiques permettent également la régénération du catalyseur avec de l'oxygène pur sans risque de surchauffe du catalyseur compte tenu du rapport très élevé entre la circulation des solides et le flux d'oxygène, ce qui permet de réduire la dimension du volume de régénération et de récupérer un flux d'oxydes de carbone relativement concentré, afin de pouvoir le traiter économiquement en vue de son stockage profond et durable qui sera nécessaire pour la protection de l'environnement.

La quantité d'oxygène injecté permet d'influencer le rapport entre la teneur en CO et en CO² et donc la chaleur de réaction et donc la température du lit fluidifié. La diminution du débit d'oxygène peut être compensée en le diluant avec de la vapeur d'eau afin de stabiliser le flux de gaz traversant le lit fluidifié.

Par exemple, afin de montrer à titre purement indicatif les ordres de grandeurs, on peut considérer un réacteur industriel de 2m de diamètre et 3m de long, d'un volume total d'environ 9m³. Le lit fluidifié rotatif peut avoir une épaisseur de 15cm et tourner à une vitesse moyenne de 20m/s ou environ 3 tours par seconde, ce qui génère une force centrifuge d'environ 40 fois la pesanteur, ce qui est suffisant pour obtenir un lit fluidifié très concentré, composé de particules catalytiques d'une cinquantaine de microns, avec une densité moyenne d'environ 800kg/m³, ce qui donne une circulation des solides de 7 tonnes par seconde.

Si les 2/3 du lit fluidifié rotatif sont utilisé pour le craquage, il peut être traversé par environ 180 kg d'hydrocarbures lourds par seconde, correspondant à une capacité annuelle de 5 millions de tonnes par an. Le fluide à l'état gazeux subit une forte expansion durant sa traversée du lit fluidifié en raison de son augmentation de température et de sa diminution de pression. Si sa densité moyenne en quittant le lit fluidifié est d'environ 3kg/m³, son débit volumétrique est de 60m³/s, ce qui donne une vitesse radiale interstitielle moyenne d'environ 10m/s, ce qui permet une bonne séparation entre les particules solides et le gaz compte tenu de la force centrifuge de 40 fois la pesanteur.

Le rapport entre la circulation des solides et le débit d'hydrocarbures lourds est d'environ 40, ce qui est environ un ordre de grandeur supérieur à celui des réacteurs de craquage catalytique classiques. Ceci permet d'avoir de plus petites variations des températures des solides du lit fluidifié rotatif et donc de travailler à des températures moyennes sensiblement plus élevées, ce qui permet d'augmenter la vitesse des réactions et donc de compenser le très court temps de contact entre les solides et les hydrocarbures.

Le temps de résidence moyen du gaz dans le lit fluidifié est d'environ 15msec. Ce temps peut être augmenté, si nécessaire, en augmentant la pression du gaz, ce qui nécessite aussi l'augmentation de la température afin de maintenir l'équilibre ou la sélectivité. La pression et la température plus élevée augmentent aussi la vitesse de réaction, ce qui contribue à améliorer le taux de conversion.

A titre de comparaison, l'ensemble du volume du réacteur et du régénérateur d'une unité industrielle classique de même capacité est de plus d'un ordre de grandeur plus grand.

## Revendications

1. Procédé de transformation thermique et/ou catalytique d'au moins deux fluides réactifs différents (A, C) traversant un lit fluidifié rotatif comprenant des particules solides pouvant être ou contenir des catalyseurs et tournant à l'intérieur d'une chambre de réaction annulaire, **caractérisé en ce que:**
- lesdits fluides réactifs (A, C) sont injectés séparément et traversent ledit lit fluidifié rotatif chacun dans au moins un volume longitudinal de réaction (VA, VC);
- la composition et/ou la température desdites particules solides dans ledit lit fluidifié rotatif est modifiée au contact avec lesdits fluides réactif (A, C),
- lesdits fluides réactifs (A, C) sont transformés au contact des particules solides en des fluides transformés (A', C'), et
- les fluides transformés (A', C') sont évacués de la chambre de réaction annulaire par un dispositif d'évacuation des fluides.

2. Procédé selon la revendication 1, **caractérisé en ce que** les fluides transformés (A', C') sont évacués séparément de la dite chambre annulaire par au moins deux chambres longitudinales d'évacuation séparées.

3. Procédé selon la revendication 1 ou 2, **caractérisé en ce qu'**un fluide de séparation (B), différent des fluides réactifs (A, C) est injecté séparément des dits fluides réactif (A, C) et traverse ledit lit fluidifié rotatif dans au moins deux volumes longitudinaux de séparation (VB1, VB2), lesdits volumes de séparation séparant les volumes longitudinaux de réaction (VA, VC) l'un de l'autre.

4. Procédé selon la revendication 2 ou 3, **caractérisé en ce que** les dits fluides sont injectés dans la dite chambre annulaire (44) à partir de surfaces longitudinales d'injection et que les positions relatives des ces surfaces sont déplaçables par rapport à la position des surfaces longitudinales d'évacuation des fluides (9) par où les fluides sont évacués centralement de la dite chambre annulaire (44).

5. Procédé selon l'une quelconque des revendications 1 à 4, **caractérisé en ce que** ladite modification des particules solides comprend le chauffage des particules solides en contactant les dites particules solides avec un fluide réactif préchauffé (A) en/ou à l'aide de réactions chimiques entre le fluide réactif (A) et les particules solides et/ou entre les différents composants du fluide réactif (A).

6. Procédé selon l'une quelconque des revendications 1 à 4, **caractérisé en ce que** ladite modification des particules solides comprend le refroidissement des particules solides en contactant les dites particules solides avec un des fluides réactifs (A) qui contient un liquide de refroidissement pulvérisé sous la forme de fines gouttelettes et qui en s'évaporant au contact des dites particules solides les refroidissent.

7. Procédé selon l'une quelconque des revendications 1 à 6, **caractérisé en ce** les fluides transformés (A', C') sont refroidis pendant leur évacuation de la dite chambre annulaire en pulvérisant des gouttelettes d'un liquide de refroidissement à l'intérieur du dit dispositif d'évacuation des fluides.

8. Procédé selon l'une quelconque des revendications 1 à 5 et 7, **caractérisé en ce que** le fluide réactif (A) comprend au moins deux composants ou un mélange de plusieurs composants, qui sont injectés ensemble ou à proximité l'un de l'autre au travers d'un même volume de réaction et qui réagissent entre eux en produisant de la chaleur au contact des solides à l'intérieur du volume longitudinal de réaction du fluide.

9. Procédé selon la revendication 8, dans le quel le fluide de réaction (A) contient comme composants de l'oxygène et un fluide combustible, de préférence de l'hydrogène ou des hydrocarbures légers, lesquelles composants sont injectés en mélange ou séparément, et lesquelles composants réagissent ensemble à l'intérieur du lit fluidifié en produisant de la chaleur qui est transférée aux dites particules solides.

10. Procédé selon l'une quelconque des revendications 1 à 5 et 7, dans lequel - un des fluides de réaction (A) contient comme composant de l'oxygène,
- un autre fluide de réaction (C) contient comme composant un hydrocarbure et produit de l'hydrogène lors de sa transformation,
- lesdites particules solides contiennent un métal qui est oxydé par l'oxygène contenu dans ledit fluide de réaction (A), et
- les oxydes dudit métal sont réduits par de l'hydrogène produit par ledit fluide de réaction (C).

11. Procédé selon l'une quelconque des revendications 1 à 5 et 7, dans lequel un des fluides de réaction (C) contient des hydrocarbures qui, en se transformant au contact desdites particules solides, déposent du carbone sur lesdites particules solides du dit lit fluidifié rotatif et dans le quel un autre fluide de réaction (A) contient de l'oxygène qui oxyde ledit carbone et réchauffe lesdites particules solides.

12. Dispositif à lit fluidifié rotatif permettant la transformation thermique et/ou catalytique d'au moins deux fluides réactifs différents (A,C) en des fluides transformés (A',C') comprenant:
- un réacteur comprenant au moins une chambre annulaire (44) contenant des particules solides délimitée par une paroi circulaire extérieure (2), une paroi circulaire intérieure (7, 7.1, 7.2) et deux côtés latéraux;
- un dispositif d'alimentation de particules solides dans la dite chambre annulaire (44) au travers d'une ou de plusieurs de ses parois circulaires et/ou latérales;
- un dispositif d'alimentation de fluides, gazeux ou liquides, permettant d'alimenter séparément au moins trois fluides différents, comprenant au moins deux fluides réactifs (A, C) et un fluide de séparation (B), et comprenant des injecteurs de fluides répartis le long de ladite paroi circulaire extérieure permettant d'injecter les fluides le long de cette paroi dans une direction ayant une composante principalement tangentielle,
- un dispositif d'évacuation des fluides comprenant une cheminée centrale traversant ou pénétrant dans la dite chambre annulaire et munies d'ouvertures de sortie (9, 9.1, 9.2) par où les fluides peuvent être évacués de la dite chambre annulaire (44);
**caractérisé en ce que** la dite cheminée centrale est divisée en au moins deux chambres longitudinales d'évacuation séparées (ZA, ZC ou ZF, ZR) par où les fluides transformés (A',C') peuvent être évacués séparément.

13. Dispositif selon la revendication 12, **caractérisé en ce que** la dite cheminée centrale est divisée en au moins une chambre longitudinale d'évacuation fixe et une chambre longitudinale d'évacuation rotative.

14. Dispositif selon la revendication 12 ou 13, dans lequel, quand le dispositif est en utilisation, la paroi circulaire extérieure (2) de ladite chambre annulaire (44) est divisée en au moins quatre surfaces longitudinales d'injection, comprenant au moins deux surfaces longitudinales d'injection par laquelle sont injectés les fluides réactifs (A, C) et au moins deux surfaces longitudinales d'injection par laquelle est injecté un fluide de séparation (B).

15. Dispositif selon l'une quelconque des revendications 12 à 14, **caractérisé en ce que** le dispositif comprend un dispositif permettant de modifier la position relative des dites surfaces longitudinales d'injection par rapport à la position des dites chambres longitudinales d'évacuation séparées.

16. Dispositif selon l'une quelconque des revendications 12 à 14, **caractérisé en ce que** le dispositif comprend un dispositif permettant de modifier la position relative des surfaces longitudinales d'évacuation par rapport à la position des volumes longitudinaux d'injection.

17. Utilisation d'un dispositif à lit fluidifié rotatif selon l'une quelconque des revendications 12 à 16, pour la transformation thermique et/ou catalytique d'au moins deux fluides réactifs différents (A, C) en des fluides transformés (A', C') selon un procédé d'une quelconque des revendications 1 à 11.
